# EUROPEAN PATENT SPECIFICATION

(11) **EP 4 384 848 B1**
(45) Date of publication and mention of the grant of the patent: **03.12.2025**
(21) Application number: 22822238.6
(22) Date of filing: 31.10.2022
(51) Int. Cl.: G01S 7/481, G01S 7/497, G01S 17/42, G01S 17/86, G01S 17/89, G01S 17/931

(54) **IMAGE CAPTURE SYSTEM INCLUDING A LIDAR DEVICE AND CAMERAS HAVING A ROLLING SHUTTER SENSOR**
BILDERFASSUNGSSYSTEM MIT EINER LIDAR-VORRICHTUNG UND KAMERAS MIT ROLLLADENSENSOR
SYSTÈME DE CAPTURE D'IMAGE COMPRENANT UN DISPOSITIF LIDAR ET DES CAMÉRAS COMPORTANT UN CAPTEUR D'OBTURATEUR ROULANT

(43) Date of publication of application: 19.06.2024
(73) Proprietor: Google Technology Holdings LLC, Mountain View, CA 94043 (US)
(72) Inventor: MARTIN, David, Mountain View, California 94043 (US); WANG, Li-Ping, Mountain View, California 94043 (US)
(74) Representative: Chettle, John Edward
(86) International application number: PCT/US2022/048387
(87) International publication number: WO 2024/096853

(56) References cited:
- US-A1- 2018 329 066
- US-A1- 2019 250 415

## Description

### FIELD

The disclosure relates generally to systems having a LIDAR (light detection and ranging) device and cameras having a rolling shutter sensor. In particular, the disclosure relates to synchronizing image captures by a rotating LIDAR device and each of the cameras having the rolling shutter sensor to minimize the occurrence of visual artifacts caused by parallax.

### BACKGROUND

Systems that employ cameras, when the scene contains motion, or when the system is under motion, can experience image processing problems due to parallax. For example, the cameras can operate on their own schedules and with significant physical separation. Physical separation between the cameras introduces static parallax. When the cameras capture an image of a scene at a time different from each other, motion introduces motion-induced parallax. Parallax, such as static parallax and motion-induced parallax, greatly complicates image processing that conflates imagery captured by the cameras due to moving objects and occlusions.
US 2018/329066 A1 describes methods and systems that can augment 360 degree panoramic LIDAR results (e.g., from a spinning LIDAR system) with color obtained from color cameras. A color-pixel-lookup table can specify the correspondence between LIDAR pixels (depth/ranging pixels) and color pixels, which may be done at different viewing object distances. The operation of the color cameras can be triggered by the angular positions of the LIDAR system. For example, a color image of a particular camera can be captured when the LIDAR system is at a particular angular position, which can be predetermined based on properties of the cameras (e.g., shutter speed). Alternatively or in addition, a common internal clock can be used to assign timestamps to LIDAR and color pixels as they are captured. The corresponding color pixel(s), e.g., as determined using a color-pixel-lookup table, with the closest timestamp can be used for colorization.
US 2019/250415 A1 describes apparatuses, systems, and methods for producing non-rotationally symmetric optical aberrations. Such aberrations may be created by a removable attachment that may be attached to another lens, such as a spherical lens. Aberrations that appear to reproduce an anamorphic effect may be produced, yet the underlying camera system may remain a spherical camera system, and the capture mode may remain non-anamorphic.

### SUMMARY

Aspects and advantages of embodiments of the disclosure will be set forth in part in the following description, or can be learned from the description, or can be learned through practice of the example embodiments.

In an example embodiment, an image capture system includes a light detection and ranging (LIDAR) device which captures images of an environment while rotating and a plurality of cameras, disposed separately from the LIDAR device, each including a rolling shutter sensor and each capturing images of the environment. The plurality of cameras include a first camera disposed to face in a first direction and a second camera disposed to face in a second direction, and so on. The image capture system further includes one or more processors configured to synchronize a time at which the first camera captures a first image with a time at which the LIDAR device captures a second image when the LIDAR device rotates to face the first direction, and to synchronize a time at which the second camera captures a third image with a time at which the LIDAR device captures a fourth image when the LIDAR device rotates to face in the second direction, and so on.

In some implementations, the cameras (e.g., the first camera) includes a plurality of bilaterally symmetrical lenses and/or lens groups such as toric lenses, cylindrical lenses, and the like.

In some implementations, the plurality of the bilaterally symmetric lens groups includes a first cylindrical lens group and a second cylindrical lens group, and the second cylindrical lens group is disposed in a perpendicular manner with respect to the first cylindrical lens group.

In some implementations, the first camera produces a same sampling pattern as the LIDAR device.

In some implementations, the one or more processors are configured to synchronize the time at which the first camera captures the first image with the time at which the LIDAR device captures the second image when the LIDAR device rotates to face in the first direction by: outputting, by the LIDAR device, a signal indicating a position of the LIDAR device, and triggering the first camera to capture the first image based on the signal indicating the position of the LIDAR device.

In some implementations, the one or more processors are configured to synchronize the time at which the first camera captures the first image with the time at which the LIDAR device captures the second image when the LIDAR device rotates to face in the first direction by: adjusting a speed of an external clock provided to the first camera to adjust a scanning velocity of the rolling shutter sensor.

In some implementations, the one or more processors are configured to synchronize the time at which the first camera captures the first image with the time at which the LIDAR device captures the second image when the LIDAR device rotates to face in the first direction by: adjusting a rotation rate of the LIDAR device by adjusting a speed of an external clock provided to the LIDAR device.

In some implementations, the plurality of cameras are arranged in a ring-shaped pattern about an axis of rotation of the LIDAR device.

In some implementations, the LIDAR device and the plurality of cameras are spaced apart from each other in a direction along an axis of rotation of the LIDAR device by less than a threshold distance.

In some implementations, the threshold distance is ten centimeters or less.

In some implementations, the plurality of cameras include at least one red-green-blue (RGB) camera.

In some implementations, the image capture system is mounted on a vehicle.

In an example embodiment, a computer-implemented method for an image capture system is provided. The computer-implemented method includes capturing, by a light detection and ranging (LIDAR) device, images of an environment while the LIDAR device is rotating; capturing, by a plurality of cameras disposed separately from the LIDAR device, images of the environment, the plurality of cameras each having a rolling shutter sensor and including a first camera disposed to face in a first direction and a second camera disposed to face in a second direction; synchronizing a time at which the first camera captures a first image with a time at which the LIDAR device captures a second image when the LIDAR device rotates to face in the first direction; and synchronizing a time at which the second camera captures a third image with a time at which the LIDAR device captures a fourth image when the LIDAR device rotates to face in the second direction.

In some implementations, synchronizing the time at which the first camera captures the first image with the time at which the LIDAR device captures the second image when the LIDAR device rotates to face in the first direction comprises one or more of: outputting, by the LIDAR device, a signal indicating a position of the LIDAR device, and triggering the first camera to capture the first image based on the signal indicating the position of the LIDAR device; adjusting a speed of an external clock provided to the first camera to adjust a scanning velocity of the rolling shutter sensor; and adjusting a rotation rate of the LIDAR device by adjusting a speed of an external clock provided to the LIDAR device.

In some implementations, the first camera includes a first cylindrical lens group and a second cylindrical lens group, and the second cylindrical lens group is disposed in a perpendicular manner with respect to the first cylindrical lens group.

In some implementations, the LIDAR device and the plurality of cameras are spaced apart from each other in a direction along an axis of rotation of the LIDAR device by less than a threshold distance, and the plurality of cameras are arranged in a ring-shaped pattern about the axis of rotation of the LIDAR device.

In an example embodiment, a non-transitory computer-readable medium which stores instructions that are executable by one or more processors of an image capture system is provided. The non-transitory computer-readable medium stores instructions which are executable by one or more processors of the image capture system. The instructions include: instructions to cause a light detection and ranging (LIDAR) device to capture images of an environment while rotating; instructions to cause a plurality of cameras, disposed separately from the LIDAR device and each including a rolling shutter sensor, to capture images of the environment, the plurality of cameras including a first camera disposed to face in a first direction and a second camera disposed to face in a second direction; instructions to synchronize a time at which the first camera captures a first image of a first scene of the environment with a time at which the LIDAR device captures a second image of the first scene of the environment when the LIDAR device rotates to face in the first direction; and instructions to synchronize a time at which the second camera captures a third image of a second scene of the environment with a time at which the LIDAR device captures a fourth image of the second scene of the environment when the LIDAR device rotates to face in the second direction.

In some implementations, the instructions include synchronizing the time at which the first camera captures the first image with the time at which the LIDAR device captures the second image when the LIDAR device rotates to face in the first direction by one or more of: outputting, by the LIDAR device, a signal indicating a position of the LIDAR device, and triggering the first camera to capture the first image based on the signal indicating the position of the LIDAR device; adjusting a speed of an external clock provided to the first camera to adjust a scanning velocity of the rolling shutter sensor; and adjusting a rotation rate of the LIDAR device by adjusting a speed of an external clock provided to the LIDAR device.

The non-transitory computer-readable medium may store additional instructions to execute other aspects and operations of the image capture system and computer-implemented method as described herein.

These and other features, aspects, and advantages of various embodiments of the disclosure will become better understood with reference to the following description, drawings, and appended claims. The accompanying drawings, which are incorporated in and constitute a part of this specification, illustrate examples of the disclosure and, together with the description, serve to explain the related principles.

### BRIEF DESCRIPTION OF THE DRAWINGS

Detailed discussion of example embodiments directed to one of ordinary skill in the art is set forth in the specification, which makes reference to the appended drawings, in which:
FIG. 1 is an example system including block diagrams of a system including an image capture system, a server computing system, and one or more external computing devices, according to one or more examples of the disclosure.
FIG. 2 is an example illustration of an image capture system, according to one or more examples of the disclosure.
FIG. 3 is an example illustration of a system, according to one or more examples of the disclosure.
FIG. 4 is an example illustration of one or more aspects of an image capture system, according to one or more examples of the disclosure.
FIGS. 5A-5C are example illustrations of scan lines corresponding to one or more aspects of an image capture system, according to one or more examples of the disclosure.
FIG. 6 is an example illustration of one or more aspects of a camera, according to one or more examples of the disclosure.
FIGS. 7A-7C are example illustrations of scan lines corresponding to one or more aspects of an image capture system, according to one or more examples of the disclosure.
FIG. 8 is a flow diagram of an example, non-limiting computer-implemented method according to one or more examples of the disclosure.

### DETAILED DESCRIPTION

Reference now will be made to embodiments of the disclosure, one or more examples of which are illustrated in the drawings, wherein like reference characters denote like features. Each example is provided by way of explanation of the disclosure and is not intended to limit the disclosure. In fact, it will be apparent to those skilled in the art that various modifications and variations can be made to the disclosure without departing from the scope or spirit of the disclosure. For instance, features illustrated or described as part of one embodiment can be used with another embodiment to yield a still further embodiment. Thus, it is intended that the disclosure covers such modifications and variations as come within the scope of the appended claims and their equivalents.

Terms used herein are used to describe the example embodiments and are not intended to limit and / or restrict the disclosure. The singular forms "a," "an" and "the" are intended to include the plural forms as well, unless the context clearly indicates otherwise. In this disclosure, terms such as "including", "having", "comprising", and the like are used to specify features, numbers, steps, operations, elements, components, or combinations thereof, but do not preclude the presence or addition of one or more of the features, elements, steps, operations, elements, components, or combinations thereof.

It will be understood that, although the terms first, second, third, etc., may be used herein to describe various elements, the elements are not limited by these terms. Instead, these terms are used to distinguish one element from another element. For example, without departing from the scope of the disclosure, a first element may be termed as a second element, and a second element may be termed as a first element.

The term "and / or" includes a combination of a plurality of related listed items or any item of the plurality of related listed items. For example, the scope of the expression or phrase "A and/or B" includes the item "A", the item "B", and the combination of items "A and B".

In addition, the scope of the expression or phrase "at least one of A or B" is intended to include all of the following: (1) at least one of A, (2) at least one of B, and (3) at least one of A and at least one of B. Likewise, the scope of the expression or phrase "at least one of A, B, or C" is intended to include all of the following: (1) at least one of A, (2) at least one of B, (3) at least one of C, (4) at least one of A and at least one of B, (5) at least one of A and at least one of C, (6) at least one of B and at least one of C, and (7) at least one of A, at least one of B, and at least one of C.

Examples of the disclosure are directed to an image capture system which can generate or produce a high-performance image in a full diversity of environments (e.g., while a vehicle including the image capture system is in motion or when an environment which is captured by the image capture system includes objects in motion).

According to examples of the disclosure, the image capture system may include a LIDAR device, which is configured to be rotatable and to capture images of an environment while rotating, and a plurality of cameras, disposed separately from the LIDAR device and having a rolling shutter, configured to capture images of the environment. For example, the cameras may include a first camera which faces in a first direction and is configured to capture a first image of a first scene of the environment in synchronization with the LIDAR device when the LIDAR device is rotated to face in the first direction and captures a second image of the first scene of the environment. For example, the cameras may include a second camera which faces in a second direction and is configured to capture a third image of a second scene of the environment in synchronization with the LIDAR device when the LIDAR device is rotated to face in the second direction and captures a fourth image of the second scene of the environment.

For example, the cameras may be positioned or located within a threshold distance of the LIDAR device to prevent or minimize static parallax. For example, the cameras may be disposed in a ring-shaped pattern below or above the LIDAR device. For example, each of the cameras may be disposed within three centimeters to ten centimeters of the LIDAR device, for example less than five centimeters apart from the LIDAR device. The physical proximity between each camera and the LIDAR device minimizes static parallax.

Each of the cameras may include a rolling shutter (i.e., a rolling shutter sensor). For example, the cameras may be configured so that a sweep of the rolling shutters across a scene is precisely synchronized with a sweep of the LIDAR device.

There are several methods to achieve this synchronization, explained below. For example, the cameras may include a plurality of bilaterally symmetrical lenses and/or lens groups such as toric lenses, cylindrical lenses, and the like. In some implementations, the plurality of the bilaterally symmetric lens groups includes a first cylindrical lens group and a second cylindrical lens group, and the second cylindrical lens group is disposed in a perpendicular manner with respect to the first cylindrical lens group. The cameras may include one or more cylindrical lenses which are configured so that a scan of the cameras matches the sweep of the LIDAR device which follows a plate carree/flat square/latitude-longitude projection. For example, the cameras may include a plurality of cylindrical lenses wherein at least one cylindrical lens is arranged in a perpendicular manner to at least one other cylindrical lens. The optics of the plurality of cameras are configured to match the sweep of the LIDAR device. For example, scan lines of a LIDAR device are vertical and spaced apart in a horizontal direction in a non-uniform manner. The configuration of the cylindrical lenses as described herein obtain a similar scan line projection as the LIDAR device to minimize timing errors between the cameras and the LIDAR device.

According to another example of the disclosure, the cameras may be synchronized to the LIDAR device by adjusting a speed (velocity) of a clock supplied to the rolling shutter sensor. For example, the rolling shutter sensor sweep speed may be determined by a line clock speed, which is determined by an external input clock (INCK) speed. The external input clock may be sped up or down to adjust the speed of the rolling shutter so as to match a sweep speed of the LIDAR device.

According to another example of the disclosure, the cameras may be synchronized to the LIDAR device by triggering a capture of an image by each camera at a time that a position of the LIDAR device is determined to be aligned with a position of the corresponding camera. For example, the LIDAR device may output a signal (e.g., a pulse) indicating a position of the LIDAR device. For example, the LIDAR device may output a signal (e.g., a pulse) as the LIDAR device rotates a predetermined amount (e.g., every 30 degrees, every 45 degrees, every 60 degrees, etc.). The image capture system may be configured to sync outputs from the LIDAR device to lock the camera triggers to the actual phase and frequency of the LIDAR device rotation.

According to another example of the disclosure, the cameras may be synchronized with the LIDAR device by adjusting a speed of an external clock provided to the LIDAR device. For example, the LIDAR device rotation rate is relative to the external clock, and so the rotation speed of the LIDAR device relative to real time may be adjusted by adjusting the pulses-per-second (PPS) supplied to the LIDAR device from the external clock, or adjusting the precision time protocol (PTP) of the external clock itself.

Each of the examples for synchronizing the cameras and LIDAR device may be implemented alone or in combination with one another.

According to examples of the disclosure, the plurality of cameras include color cameras (e.g., a multi-chromatic camera such as a RGB camera). The color cameras may capture an image in any color space. For example, the color space may include RGB (red, green, and blue additive primaries), YCbCr (luma component, blue-difference chroma component, red-difference chroma component), HSV (hue, saturation, value), YUV (luminance, blue projection, red projection), L*a*b* (lightness value, green-red opponent channel, and yellow-blue opponent channel), and the like.

According to examples of the disclosure, the LIDAR device may be configured to rotate 360 degrees in a horizontal plane (circumferential direction) and have a predetermined field of view (vertically), such as 30 degrees, 40 degrees, 90 degrees, and the like. For example, the LIDAR device may have a rotation rate of 10 Hz (i.e., 10 revolutions per second), 20 Hz (i.e., 20 revolutions per second), and the like. The LIDAR device and cameras may have a same resolution (e.g., 640x480 pixels). The LIDAR device and cameras may have a same field of view in a vertical direction (e.g., 90 degrees).

For example, the image capture system may include six cameras arranged in a ring-shaped pattern evenly spaced apart in a circumferential direction (e.g., by 60 degrees). Each of the six cameras may have a field of view which is about 60 degrees in a horizontal plane (circumferential direction) and a field of view in the vertical direction of about 90 degrees. The rolling shutter speed may be configured to be adjustable. For example, when the LIDAR device rotates at 7200 degrees per second (20 Hz) and the camera has a horizontal plane field of view of about 60 degrees, the rolling shutter speed may be set to 7200 degrees per second. The frame rate of each camera among the cameras can be configured by one or more processors to be the same as the rotation rate of the LIDAR device (e.g., 20 Hz LIDAR device rotation speed --> 20 frames/second camera frame rate). The one or more processors can be configured to adjust the rolling shutter rate of each of the cameras to correspond to the rotation speed of the LIDAR device (e.g., 20 Hz = 7200 degrees/second). Converting the rotation speed of the LIDAR device into a line clock rate / max frame rate depends on the field of view of each of the cameras. For example, with six cameras, each camera may have about a 60 degree field of view, and with a LIDAR device rotation speed of 7200 degrees/second, the rolling shutter of each camera will need to be configured to traverse the sensor in 60/7200 = 1/120 seconds. Thus, the one or more processors may be configured to set the sensor clock to correspond to a maximum frame rate of 120 frames/second, and to trigger a frame once per LIDAR device revolution such that frames are produced at a rate of 20 frames/second. The data rate on the rolling shutter sensor's interface will be bursty. That is, the interface will run at the 120 Hz rate, but will output data only 1/6 of the time; the remainder of the time the interface will produce blank data, waiting for the LIDAR device to come around for the next pass by changing the frames per second rate to 107 Hz (e.g., instead of 60 Hz). Thus, according to examples of the disclosure, the image capture system is configured to synchronize the rolling shutter sweep of each camera to the rotary sweep of the LIDAR device to prevent or avoid motion parallax between images captured by the LIDAR device and the cameras.

The image capture system may be configured to generate images based on the images captured by the LIDAR device and the images captured by the plurality of cameras.

The image capture system disclosed herein may be implemented in any electronic apparatus which can accommodate two or more cameras and a LIDAR device which is configured to rotate. For example, the image capture system may be implemented in a security system, a surveillance system, a robot, a home appliance, a vehicle, and the like. For example, the image capture system may be implemented indoors or outdoors.

Example aspects of the disclosure provide several technical effects, benefits, and/or improvements in image capture system technology. For example, according to the examples disclosed herein, the image capture system has expanded operations and capabilities, as the LIDAR device and cameras can operate in more diverse environments and an image quality of an image obtained based on the combination of an image captured by the LIDAR device and one of the cameras can be improved by avoiding or minimizing static and/or motion parallax.

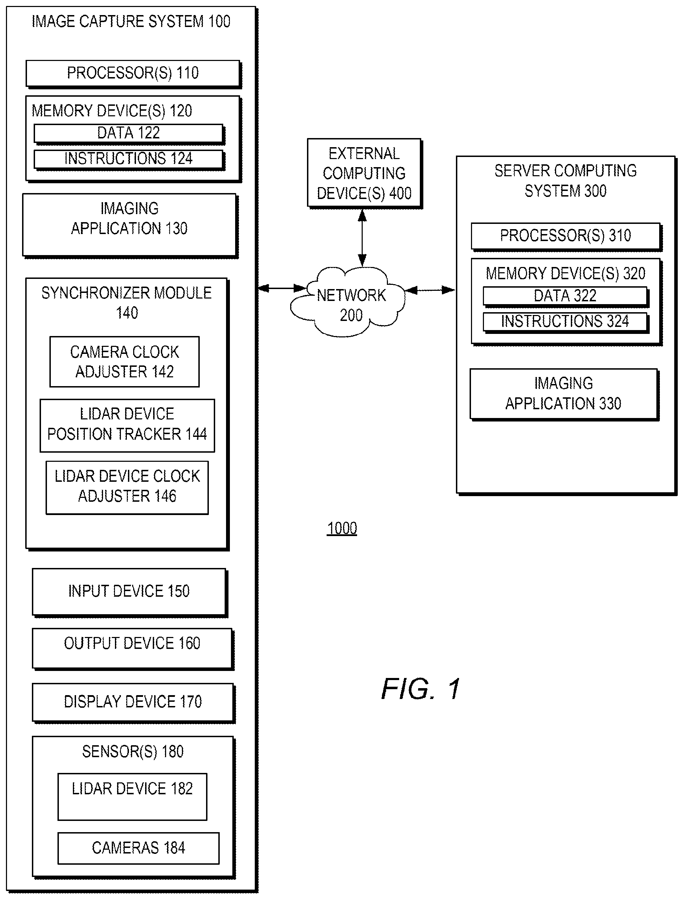

Referring now to the drawings, FIG. 1 illustrates block diagrams of a system including an image capture system, a server computing system, and one or more external computing devices, according to one or more examples of the disclosure. In FIG. 1, the example system 1000 includes an image capture system 100, a server computing system 300, and one or more external computing devices 400 which are connected with one another over a network 200. Any communications interfaces suitable for communicating via the network 200 (such as a network interface card) may be utilized as appropriate or desired by the image capture system 100, server computing system 300, and one or more external computing devices 400.

The image capture system 100 may include, for example, any electronic apparatus which can accommodate two or more cameras and a LIDAR device, for example, a rotating LIDAR device. For example, the image capture system 100 may be implemented in a security system, a surveillance system, a robot, a home appliance, a vehicle, and the like. For example, the image capture system 100 may be implemented indoors or outdoors. The server computing system 300 may include a server, or a combination of servers (e.g., a web server, application server, etc.) in communication with one another, for example in a distributed fashion. The one or more external computing devices 400 may include a personal computer, a smartphone, a laptop, a tablet computer, and the like.

According to some implementations of the disclosure, the image capture system 100 may communicate with the server computing system 300 to generate a third image based on a first image captured by the LIDAR device 182 and a second image captured by one of the cameras 184. For example, the server computing system 300 may be configured to control one or more of the LIDAR device 182 and/or cameras 184 to capture an image via the imaging application 330. According to some implementations of the disclosure, the image capture system 100 may communicate with the server computing system 300 to execute the imaging application 330 which may be used to activate or control the LIDAR device 182 and/or cameras 184 to capture an image via the imaging application 330, and/or to generate the third image based on the first image and the second image.

According to some implementations of the disclosure, the image capture system 100 may communicate with the one or more external computing devices 400 to execute an imaging application to activate or control the LIDAR device 182 and/or cameras 184 to capture an image via an imaging application, and/or to generate the third image based on the first image and the second image. As examples, the one or more external computing devices 400 may include a home appliance such as a home security system or a vehicle or a smartphone.

For example, the network 200 may include any type of communications network such as a local area network (LAN), wireless local area network (WLAN), wide area network (WAN), personal area network (PAN), virtual private network (VPN), or the like. For example, wireless communication between elements of the examples described herein may be performed via a wireless LAN, Wi-Fi, Bluetooth, ZigBee, Wi-Fi direct (WFD), ultra wideband (UWB), infrared data association (IrDA), Bluetooth low energy (BLE), near field communication (NFC), a radio frequency (RF) signal, and the like. For example, wired communication between elements of the examples described herein may be performed via a pair cable, a coaxial cable, an optical fiber cable, an Ethernet cable, and the like. Communication over the network can use a wide variety of communication protocols (e.g., TCP/IP, HTTP, SMTP, FTP), encodings or formats (e.g., HTML, XML), and/or protection schemes (e.g., VPN, secure HTTP, SSL).

The image capture system 100 may include one or more processors 110, one or more memory devices 120, an imaging application 130, a synchronizer module 140, an input device 150, an output device 160, a display device 170, and one or more sensors 180. Each of the components of the image capture system 100 may be operatively connected with one another via a system bus. For example, the system bus may be any of several types of bus structures that may further interconnect to a memory bus (with or without a memory controller), a peripheral bus, and/or a local bus using any of a variety of commercially available bus architectures.

The server computing system 300 may include one or more processors 310, one or more memory devices 320, and an imaging application 330. Each of the features of the server computing system 300 may be operatively connected with one another via a system bus. For example, the system bus may be any of several types of bus structures that may further interconnect to a memory bus (with or without a memory controller), a peripheral bus, and/or a local bus using any of a variety of commercially available bus architectures.

The one or more external computing devices 400 may include similar structural features as the server computing system 300 (e.g., one or more processors 310, one or more memory devices 320, and an imaging application 330. Therefore, a description of these features in the context of the one or more external computing devices will not be repeated again for the sake of brevity.

For example, the one or more processors 110, 310 can be any suitable processing device that can be included in an image capture system 100 or in the server computing system 300. For example, the one or more processors 110, 310 may include one or more of a processor, processor cores, a controller and an arithmetic logic unit, a central processing unit (CPU), a graphics processing unit (GPU), a digital signal processor (DSP), an image processor, a microcomputer, a field programmable array, a programmable logic unit, an application-specific integrated circuit (ASIC), a microprocessor, a microcontroller, etc., and combinations thereof, including any other device capable of responding to and executing instructions in a defined manner. The one or more processors 110, 310 can be a single processor or a plurality of processors that are operatively connected, for example in parallel.

The one or more memory devices 120, 320 can include one or more non-transitory computer-readable storage mediums, such as such as a Read Only Memory (ROM), Programmable Read Only Memory (PROM), Erasable Programmable Read Only Memory (EPROM), and flash memory, a USB drive, a volatile memory device such as a Random Access Memory (RAM), an internal or external hard disk drive (HDD), floppy disks, a blue-ray disk, or optical media such as CD ROM discs and DVDs, and combinations thereof. However, examples of the one or more memory devices 120, 320 are not limited to the above description, and the one or more memory devices 120, 320 may be realized by other various devices and structures as would be understood by those skilled in the art.

For example, the one or more memory devices 120 can store instructions, that when executed by the one or more processors 110, execute one or more operations of the imaging application 130 to cause the LIDAR device 182 to rotate and to capture images of an environment while rotating, and to cause the cameras 184, disposed separately from the LIDAR device 182, to capture images in synchronization with a time at which the LIDAR device 182 captures an image and faces in a same direction as a corresponding camera among the cameras 184, as described according to examples of the disclosure.

For example, the one or more memory devices 320 can store instructions, that when executed by the one or more processors 310, execute one or more operations of the imaging application 330 to cause the LIDAR device 182 to rotate and to capture images of an environment while rotating, and to cause the cameras 184, disposed separately from the LIDAR device 182, to capture images in synchronization with a time at which the LIDAR device 182 captures an image and faces in a same direction as a corresponding camera among the cameras 184, as described according to examples of the disclosure.

The one or more memory devices 120 can also include data 122 and instructions 124 that can be retrieved, manipulated, created, or stored by the one or more processors 110. In some examples, such data can be accessed and used as input to execute one or more operations of the imaging application 130 to cause the LIDAR device 182 to rotate and to capture images of an environment while rotating, and to cause the cameras 184, disposed separately from the LIDAR device 182, to capture images in synchronization with a time at which the LIDAR device 182 captures an image and faces in a same direction as a corresponding camera among the cameras 184, as described according to examples of the disclosure.

The one or more memory devices 320 can also include data 322 and instructions 324 that can be retrieved, manipulated, created, or stored by the one or more processors 310. In some examples, such data can be accessed and used as input to execute one or more operations of the imaging application 330 to cause the LIDAR device 182 to rotate and to capture images of an environment while rotating, and to cause the cameras 184, disposed separately from the LIDAR device 182, to capture images in synchronization with a time at which the LIDAR device 182 captures an image and faces in a same direction as a corresponding camera among the cameras 184, as described according to examples of the disclosure.

The imaging application 130 and imaging application 330 can include any application which is used to capture one or more images. For example, the captured images may be used in association with a security application, a surveillance application, a navigation application, a geo-mapping application, and the like. For example, the images may be captured using one or more of the LIDAR device 182 and the cameras 184. Image information obtained from images captured by the LIDAR device 182 and the cameras 184 can be used to generate additional images, as described according to examples of the disclosure herein.

In some implementations, the image capture system 100 can include a synchronizer module 140. For example, the synchronizer module 140 can include a camera clock adjuster 142, a LIDAR device position tracker 144, and a LIDAR device clock adjuster 146, the operations of which are described in more detail herein. The synchronizer module 140 is configured to synchronize the LIDAR device 182 and each of the cameras 184 with each other so that the cameras 184 capture images in synchronization with a time at which the LIDAR device 182 captures an image and faces in a same direction as a corresponding camera among the cameras 184. Therefore, motion parallax and static parallax between the LIDAR device 182 and the cameras 184 can be avoided or minimized.

The image capture system 100 may include an input device 150 configured to receive an input from a user and may include, for example, one or more of a keyboard (e.g., a physical keyboard, virtual keyboard, etc.), a mouse, a joystick, a button, a switch, an electronic pen or stylus, a gesture recognition sensor (e.g., to recognize gestures of a user including movements of a body part), an input sound device or voice recognition sensor (e.g., a microphone to receive a voice command), a track ball, a remote controller, a portable (e.g., a cellular or smart) phone, and so on. The input device 150 may also be embodied by a touch-sensitive display device having a touchscreen capability, for example. The input device 150 may be used by a user of the image capture system 100 to provide an input to execute the imaging application 130 and/or to input information relating to options by which the user can define conditions for controlling the LIDAR device 182 and/or cameras 184. For example, the input may be a voice input, a touch input, a gesture input, a click via a mouse or remote controller, and so on.

The image capture system 100 includes an output device 160 configured to provide an output to the user and may include, for example, one or more of an audio device (e.g., one or more speakers), a haptic device to provide haptic feedback to a user (e.g., vibration device 166), a light source (e.g., one or more light sources such as LEDs which provide visual feedback to a user), and the like.

The image capture system 100 includes a display device 170 which presents information viewable by the user, for example on a user interface (e.g., a graphical user interface). For example, the display device 170 may be a non-touch sensitive display. The display device 170 may include a liquid crystal display (LCD), a light emitting diode (LED) display, an organic light emitting diode (OLED) display, active matrix organic light emitting diode (AMOLED), flexible display, 3D display, a plasma display panel (PDP), a cathode ray tube (CRT) display, and the like, for example. However, the disclosure is not limited to these examples and may include other types of display devices. For example, the display device 170 may be configured to provide a graphical user interface by which the user can select various options with respect to the imaging application 130 (e.g., options by which the user can define conditions for controlling the LIDAR device 182 and/or cameras 184 to capture an image of a scene).

The image capture system 100 includes one or more sensors 180. The one or more sensors 180 may include the LIDAR device 182 and the cameras 184. The image capture system 100 may include other types of sensors. For example, the one or more sensors 180 may include other sensors such as an inertial measurement unit which includes one or more accelerometers and/or one or more gyroscopes. The one or more accelerometers may be used to capture motion information with respect to the image capture system 100. The one or more gyroscopes may also be used additionally, or alternatively, to capture motion information with respect to the image capture system 100. The one or more sensors 180 may also include other sensors such as a magnetometer, GPS sensor, and the like.

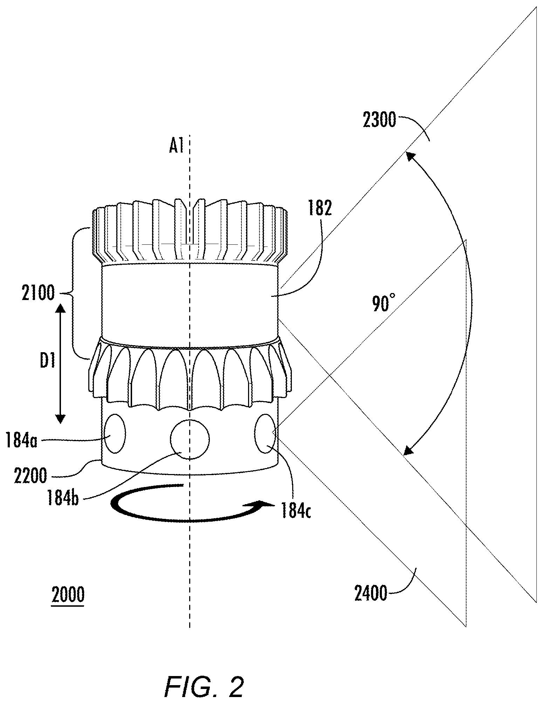

Referring to FIG. 2, an example illustration of an image capture system is shown, according to one or more examples of the disclosure. In FIG. 2, an image capture system 2000 includes a LIDAR device 182 disposed at an upper portion 2100 of the image capture system 2000 and a plurality of cameras including cameras 184a, 184b, and 184c disposed at a lower portion 2200 of the image capture system 2000. For example, some or all of the upper portion 2100 of the image capture system 2000 may be configured to rotate, while the lower portion 2200 is stationary and is not configured to rotate. For example, additional cameras (e.g., three cameras which are not shown) may be disposed on an opposite side of the lower portion 2200 such that the plurality of cameras include a total of six cameras and are disposed in a circumferential or ring-shaped manner. In some implementations, the cameras 184 may include two cameras, three cameras, four cameras, five cameras, six cameras, seven cameras, eight cameras, etc. The cameras 184 may be spaced apart in the circumferential direction at equal intervals for example. In some implementations, the cameras 184 may be disposed at the upper portion of the image capture system 2000 and the LIDAR device 182 may be disposed at the lower portion of the image capture system 2000.

For example, each of the cameras (e.g., cameras 184a, 184b, and 184c) may be positioned or located within a threshold distance D1 of the LIDAR device 182 in an axial direction A1, to prevent or minimize static parallax. For example, the distance D1 as shown in FIG. 2 may correspond to a distance between optical centers of the LIDAR device 182 and a corresponding camera among the cameras 184, in the axial direction A1. For example, each of the cameras 184 may be disposed within three centimeters to ten centimeters of the LIDAR device 182 in an axial direction A1, for example less than five centimeters apart from the LIDAR device 182. The close physical proximity between each camera among the cameras 184 and the LIDAR device 182 minimizes static parallax.

Each of the cameras among the cameras 184 may include a rolling shutter (i.e., a rolling shutter sensor). For example, the cameras 184 may be configured so that a sweep of the rolling shutters across a scene is precisely synchronized with a sweep of the LIDAR device 182. The cameras 184 may include color cameras (e.g., a multi-chromatic camera such as a RGB camera). The color cameras may capture an image in any color space. For example, the color space may include RGB (red, green, and blue additive primaries), YCbCr (luma component, blue-difference chroma component, red-difference chroma component), HSV (hue, saturation, value), YUV (luminance, blue projection, red projection), L*a*b* (lightness value, green-red opponent channel, and yellow-blue opponent channel), and the like.

According to examples of the disclosure, the LIDAR device 182 may be configured to rotate a predetermined amount in a horizontal plane (i.e., the circumferential direction), and may have a predetermined field of view in the circumferential direction. For example, the LIDAR device 182 may rotate 360 degrees in a horizontal plane (circumferential direction) and have a predetermined field of view (vertically), such as 30 degrees, 40 degrees, 90 degrees, and the like. For example, the LIDAR device 182 may have a rotation rate of 10 Hz (i.e., 10 revolutions per second), 20 Hz (i.e., 20 revolutions per second), and the like. The LIDAR device 182 and cameras 184 may have a same resolution (e.g., 640x480 pixels). The LIDAR device 182 and cameras 184 may have a same field of view in a vertical direction (e.g., 30 degrees, 40 degrees, 90 degrees, and the like). For example, the LIDAR device 182 in FIG. 2 has a 90 degree vertical field of view 2300 while camera 184c also has a 90 degree vertical field of view 2400. The LIDAR device 182 may correspond to a commercially available LIDAR device and include a light emitter (e.g., a laser) and a light receiver (e.g., a photosensor or photodetector) for measuring a time of flight and time of flight distance.

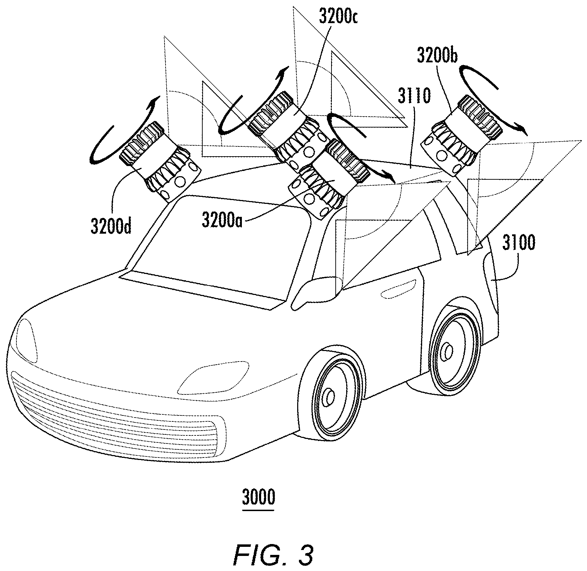

Referring to FIG. 3, an example illustration of a system is shown, according to one or more examples of the disclosure. In FIG. 3, a system 3000 includes a vehicle 3100 on which a plurality of image capture systems 3200a, 3200b, 3200c, and 3200d are mounted. For example, each of the plurality of image capture systems 3200a, 3200b, 3200c, and 3200d may be mounted on a roof 3110 of the vehicle 3100 and be oriented in different directions to capture different regions of a surrounding environment.

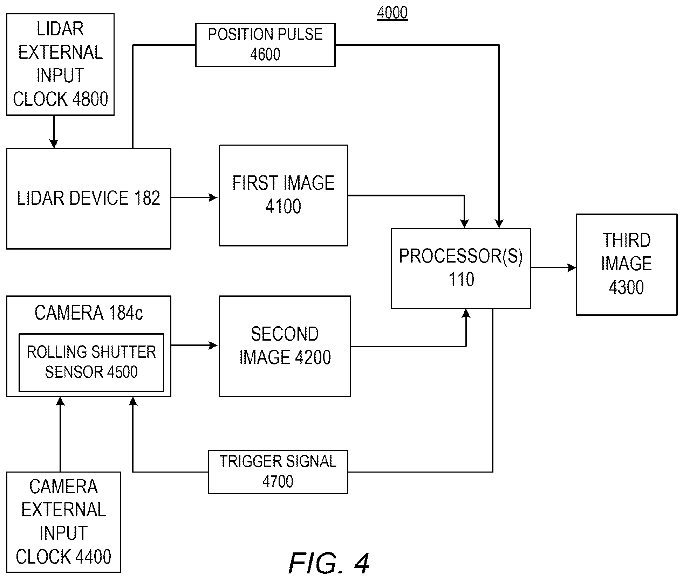

Referring to FIG. 4, an example illustration of one or more aspects of an image capture system is shown, according to one or more examples of the disclosure. As described herein, one or more methods may be implemented to synchronize operation of the LIDAR device 182 with each of the cameras 184. Referring to FIG. 4, an example system 4000 is shown which pertains to example methods by which the camera 184c can be synchronized with the LIDAR device 182. However, the examples described herein can be applied to synchronize any of the cameras 184 with the LIDAR device 182.

According to an example of the disclosure, the camera clock adjuster 142 may be configured to synchronize the cameras 184 to the LIDAR device 182 by adjusting a speed of an external clock (e.g., the camera external input clock 4400) supplied to a rolling shutter sensor 4500 of the camera 184c. For example, the rolling shutter sensor 4500 sweep speed may be determined by a line clock speed, which is determined by an external input clock (INCK) speed. The camera external input clock 4400 may be configured to be sped up or slowed down (e.g., via the camera clock adjuster 142 and/or one or more processors 110) to adjust the scanning speed (velocity) of the rolling shutter sensor 4500 so as to match a sweep (rotation) speed of the LIDAR device 182.

The speed of the rolling shutter corresponds to the line clock associated with the rolling shutter sensor 4500, which corresponds to the line-by-line max readout rate of the rolling shutter sensor 4500. The line-by-line max readout rate of the rolling shutter sensor 4500 is associated with a maximum frame rate, however the frame rate can be lowered without slowing down the line clock. For example, the line clock is a multiple of the main sensor root clock ("INCK") (e.g., camera external input clock 4400). When the frame rate is lowered without slowing down the line clock, the output of the sensor can be bursty as explained in more detail below. To change the rolling shutter rate, or the line clock rate, the one or more processors 110 can be configured to adjust the root clock (INCK) from which the other clocks (like the line clock) are generated by dividing the clock rate.

When the image capture system 100 includes cameras 184 (e.g., a ring of cameras 184), a bursty readout may be output where the frame rate of each camera is much slower than the maximum that is dictated by the line clock rate. This is because each camera among the cameras 184 can be triggered only once per revolution of the LIDAR device 182. The frame rate of each camera among the cameras 184 can be configured by the one or more processors 110 to be the same as the rotation rate of the LIDAR device 182 (e.g., 20 Hz LIDAR device 182 rotation speed --> 20 frames/second camera frame rate). The one or more processors 110 can be configured to adjust the rolling shutter rate of each of the cameras 184 to correspond to the rotation speed of the LIDAR device 182 (e.g., 20 Hz = 7200 degrees/second). Converting the rotation speed of the LIDAR device 182 into a line clock rate / max frame rate depends on the field of view of each of the cameras 184. For example, with six cameras, each camera may have about a 60 degree field of view, and with a LIDAR device 182 rotation speed of 7200 degrees/second, the rolling shutter of each camera will need to be configured to traverse the sensor in 60/7200 = 1/120 seconds. Thus, the one or more processors 110 may be configured to set the sensor clock to correspond to a maximum frame rate of 120 frames/second, and to trigger a frame once per LIDAR device 182 revolution such that frames are produced at a rate of 20 frames/second. The data rate on the rolling shutter sensor's interface will be bursty. That is, the interface will run at the 120 Hz rate, but will output data only 1/6 of the time; the remainder of the time the interface will produce blank data, waiting for the LIDAR device 182 to come around for the next pass.

In general, the one or more processors 110 may be configured to match the rate between the LIDAR device 182 rotation rate and the rolling shutter speed (line clock rate) of each of the cameras 184 by: (a) adjusting the speed of the LIDAR device 182 rotation to match the speed of each of the cameras 184, or (b) adjusting the speed of the line clocks of each of the cameras 184 to match the LIDAR device 182 speed, or (c) a combination of the two.

The LIDAR device 182 is a physically rotating object, subject to accelerations as the system moves through the world (e.g., on a car or backpack or other vehicle), and so the actual precise rotation rate of the LIDAR device 182 at any given time may not be known in advance. According to aspects of the disclosure, the instantaneous rotation rate of the LIDAR device 182 may be detected by the one or more processors 110 and a rolling shutter rate of each of the cameras 184 may be adjusted in real-time to match the rotation speed of the LIDAR device 182. According to aspects of the disclosure, in some implementations alternatively the LIDAR device 182 rotation rate may be adjusted so as to match the rolling shutter rate of each of the cameras 184. According to aspects of the disclosure, in some implementations the LIDAR device 182 rotation rate may be adjusted in addition to adjusting the rolling shutter rate of each of the cameras 184. If the rotation rate variations of the LIDAR device 182 can be limited to a narrower band, then the camera-LIDAR device 182 rotation rate matching can succeed more often.

The rolling shutter speed may be configured to be sped up by increasing the clock speed of the camera external input clock 4400 which in turn increases the line clock speed of the rolling shutter sensor 4500 and the rolling shutter sensor 4500 sweep speed. Therefore, the system 4000 is configured to synchronize the rolling shutter sensor 4500 sweep of camera 184c to the rotary sweep of the LIDAR device 182 to prevent or avoid motion parallax between the first image 4100 captured by the LIDAR device 182 and the second image 4200 captured by the camera 184c.

According to another example of the disclosure, the LIDAR device position tracker 144 may be configured to synchronize the cameras 184 to the LIDAR device 182 by triggering a capture of an image by each camera at a time that a position of the LIDAR device 182 is determined to be aligned with a position of the corresponding camera among the cameras 184. For example, the LIDAR device 182 may output a signal (e.g., a pulse) indicating a position of the LIDAR device 182. For example, the LIDAR device 182 may output a signal (e.g., a pulse) each time the LIDAR device 182 rotates a predetermined amount (e.g., every 30 degrees, every 45 degrees, every 60 degrees, etc.). The LIDAR device position tracker 144 may be configured to sync outputs from the LIDAR device 182 to lock camera triggers (image captures) to the actual phase and frequency of the LIDAR device 182 rotation. For example, referring to FIG. 4, the LIDAR device 182 may output a position pulse 4600 every 60 degrees (which corresponds to six cameras which are spaced apart by 60 degrees in a circumferential direction). The position pulse 4600 may be received by the one or more processors 110 and/or the LIDAR device position tracker 144. In response to receiving the position pulse 4600, the one or more processors 110 and/or the LIDAR device position tracker 144 may determine a position of the LIDAR device 182 and/or a sweep speed of the LIDAR device 182. The one or more processors 110 and/or the LIDAR device position tracker 144 may determine, calculate, or predict a position of the LIDAR device 182 with respect to each camera among the cameras 184 and cause or trigger a corresponding camera to capture an image when the LIDAR device 182 is determined to be aligned with the corresponding camera. For example, the one or more processors 110 and/or the LIDAR device position tracker 144 may transmit a trigger signal 4700 to the camera 184c in response to the position pulse 4600 indicating or providing information that the position of the LIDAR device 182 aligns with the position of the camera 184c (e.g., at a time a vertical plane passes through optical centers of the LIDAR device 182 and the camera 184c). In response to receiving the trigger signal 4700, camera 184c captures an image of a scene of the environment at a same time that the LIDAR device 182 faces in the same direction as the camera 184c and captures an image of the scene of the environment. Therefore, a motion parallax between the first image 4100 captured by the LIDAR device 182 and the second image 4200 captured by the camera 184c is avoided or minimized.

According to another example of the disclosure, the LIDAR device clock adjuster 146 may be configured to synchronize cameras 184 with the LIDAR device 182 by adjusting a speed of an external clock (e.g., LIDAR external input clock 4800) provided to the LIDAR device 182. For example, the LIDAR device rotation rate is relative to the LIDAR external input clock 4800, and so the rotation speed of the LIDAR device 182 relative to real time may be adjusted by the LIDAR device clock adjuster 146 adjusting the pulses-per-second (PPS) supplied to the LIDAR device 182 from the LIDAR external input clock 4800, or by adjusting the precision time protocol (PTP) of the LIDAR external input clock 4800 itself. The rotation speed of the LIDAR device 182 may be adjusted to match the rolling shutter sensor 4500 sweep speed and a planned sequence of image captures of each of the cameras 184, for example. Therefore, a motion parallax between the first image 4100 captured by the LIDAR device 182 and the second image 4200 captured by the camera 184c is avoided or minimized.

Each of the examples for synchronizing the cameras 184 with the LIDAR device 182 as described with respect to the camera external input clock 4400, the LIDAR external input clock 4800, and the position pulse 4600 / trigger signal 4700, may be implemented alone or in combination with one another.

As discussed above, the LIDAR device 182 may capture and output a first image 4100 (or first image information) and the camera 184c may simultaneously capture and output a second image 4200 (or second image information). The one or more processors 110 may be configured to use or combine information from the first image 4100 and the second image 4200 to generate a third image 4300. For example, the first image 4100 may include a point cloud of individual points reflected from a scene of an environment and include depth or distance information of the scene which may be used to generate a three-dimensional third image 4300 based on the image information obtained from the second image 4200.

The image capture system 100 may be configured to generate images based on the images captured by the LIDAR device 182 and the images captured by the cameras 184. For example, the LIDAR device 182 may rotate to a position corresponding to a position of the camera 184a and capture and output a fourth image (or fourth image information) and the camera 184a may simultaneously capture and output a fifth image (or fifth image information). The one or more processors 110 may be configured to use or combine information from the fourth image and the fifth image to generate a sixth image. Likewise, the LIDAR device 182 may rotate to a position corresponding to a position of the camera 184b and capture and output a seventh image (or seventh image information) and the camera 184b may simultaneously capture and output an eighth image (or eighth image information). The one or more processors 110 may be configured to use or combine information from the seventh image and the eighth image to generate a ninth image. The methods described herein for synchronizing the captures of images by the LIDAR device 182 and the cameras 184 may be implemented with respect to any of the cameras 184. In some implementations, instead of, or in addition to, the one or more processors 110 receiving images from the LIDAR device 182 and cameras 184, the one or more processors 310 may be configured to receive such images. In some implementations, instead of, or in addition to, the one or more processors 110 generating images based on the images received from the LIDAR device 182 and cameras 184, the one or more processors 310 may be configured to generate images based on the images received from the LIDAR device 182 and cameras 184.

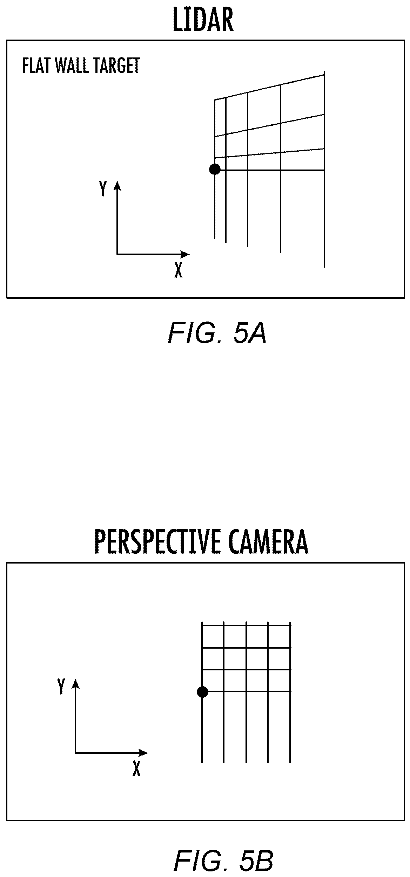

Referring to FIGS. 5A-5C, example illustrations of scan lines corresponding to one or more aspects of an image capture system are shown, according to one or more examples of the disclosure. For example, FIG. 5A illustrates scan lines 5100 of the LIDAR device 182 when the LIDAR device 182 scans a target corresponding to a flat wall as the LIDAR device 182 rotates. The sample pattern of the scan lines 5100 are vertically straight in the y direction while having non-uniform spacing in the x and y directions.

For example, FIG. 5B illustrates scan lines 5200 of a perspective camera when the perspective camera scans a target corresponding to a flat wall. The scan lines 5200 are vertically straight in the y direction while having uniform spacing in the x and y directions. Therefore, the scan pattern of the perspective camera does not match the scan pattern of the LIDAR device 182.

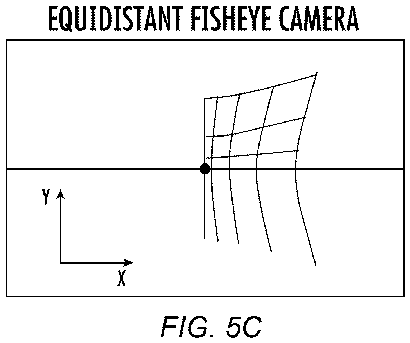

For example, FIG. 5C illustrates scan lines 5300 of an equidistant fisheye camera when the equidistant fisheye camera scans a target corresponding to a flat wall. The scan lines 5300 are vertically bent in the y direction while having non-uniform spacing in the x and y directions. Therefore, the scan pattern of the equidistant fisheye camera does not match the scan pattern of the LIDAR device 182. In general, a radially-symmetric lens will not match a projection of the LIDAR device 182, as the LIDAR device 182 has a cylindrical projection pattern.

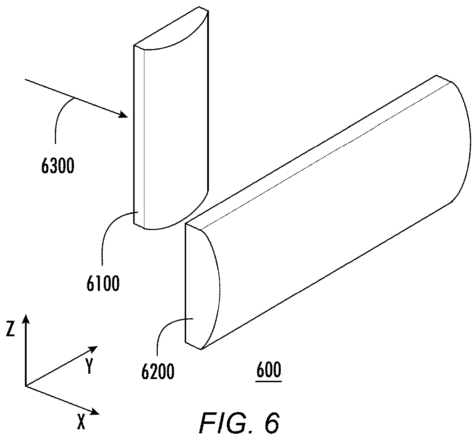

According to the invention, the cameras 184 include a plurality of lenses which are specially configured so that a projection of pixels (i.e., the scan lines or scan pattern) output from the lenses matches the scan pattern of the LIDAR device 182 as shown in FIG. 5A. For example, referring to FIG. 6, an example illustration of one or more aspects of a camera is shown, according to one or more examples of the disclosure. In FIG. 6, the camera 6000 includes a plurality of cylindrical lens groups. For example, the camera 6000 includes a first cylindrical lens group 6100 which is elongated in a first direction (e.g., the z direction), and a second cylindrical lens group 6200 which is elongated in a second direction (e.g., the y direction) such that the first cylindrical lens group 6100 is arranged in a perpendicular manner with respect to the second cylindrical lens group 6200. For example, the first cylindrical lens group 6100 may receive light 6300 before the second cylindrical lens group 6200. For example, each of the first cylindrical lens group 6100 and the second cylindrical lens group 6200 may include a plurality of elements. For example, the first cylindrical lens group 6100 may correspond to a projection function produced by the vertical fan (vertical field of view) captured by the LIDAR device 182 and the second cylindrical lens group 6200 may correspond to a projection function produced by the circumferential band (circumferential field of view) captured by the LIDAR device 182.

Therefore, in some implementations the cameras 184 may include one or more cylindrical lens groups which are configured so that a scan of the cameras 184 matches the sweep of the LIDAR device 182 which produces a cylindrical projection. For example, the cameras 184 may each include a plurality of cylindrical lens groups wherein at least one cylindrical lens group is arranged in a perpendicular manner to at least one other cylindrical lens group. The optics of the cameras 184 are thus physically configured to match the sweep of the LIDAR device 182 by arranging a plurality of cylindrical lens groups as described herein to obtain a similar scan line projection as the LIDAR device 182 (e.g., as shown in FIG. 5A) to minimize timing errors between the cameras 184 and the LIDAR device 182.

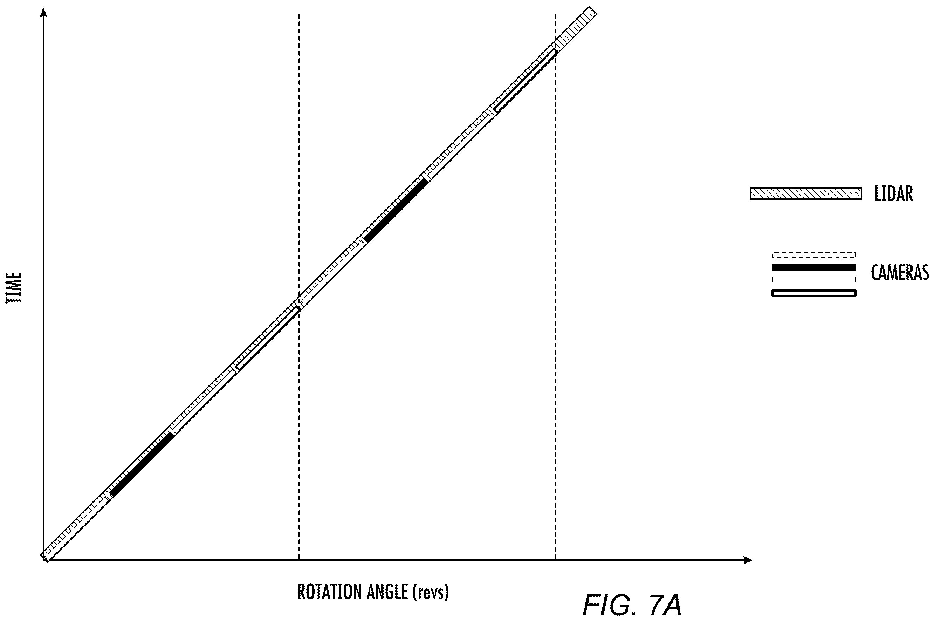

FIGS. 7A-7C are example illustrations of scan lines corresponding to one or more aspects of an image capture system, according to one or more examples of the disclosure. Referring to FIG. 7A, scan lines produced by the cameras 184 (e.g., four cameras) match scan lines produced by the LIDAR device 182. For example, the LIDAR device 182 may have a steady rotation rate so that the cameras 184 can be synchronized to the LIDAR device 182.

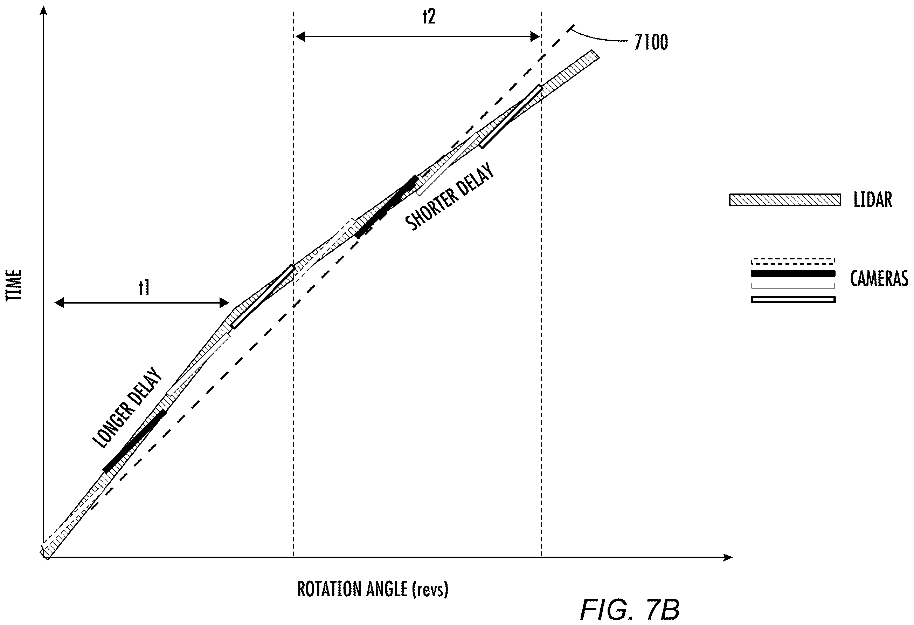

Referring to FIG. 7B, scan lines produced by the cameras 184 (e.g., four cameras) substantially match scan lines produced by the LIDAR device 182 by adjusting one or more parameters of the image capture system 100. For example, in FIG. 7B a rotation rate of the LIDAR device 182 is unsteady, where the rotation rate of the LIDAR device 182 is decreased during the period corresponding to t1 and is increased during the period corresponding to t2. For example, to maintain synchronization of image captures by the cameras 184 with image captures by the LIDAR device 182, the one or more processors 110 can be configured to adjust inter-camera trigger delays. For example, when the one or more processors 110 determine the rotation rate of the LIDAR device 182 has decreased, the one or more processors 110 may be configured to delay a trigger to one or more of the cameras 184. For example, a predetermined interval of time (based on a steady rotation rate of the LIDAR device 182 represented by the dashed line 7100 in FIG. 7B) between an image capture by a first camera and an image capture by a second camera may be adjusted (e.g., increased to have a longer delay when the rotation rate of the LIDAR device 182 has decreased). For example, when the one or more processors 110 determine the rotation rate of the LIDAR device 182 has increased, the one or more processors 110 may be configured to speed up a trigger to one or more of the cameras 184. For example, a predetermined interval of time (based on a steady rotation rate of the LIDAR device 182) between an image capture by a first camera and an image capture by a second camera may be adjusted (e.g., decreased to have a shorter delay when the rotation rate of the LIDAR device 182 has increased).

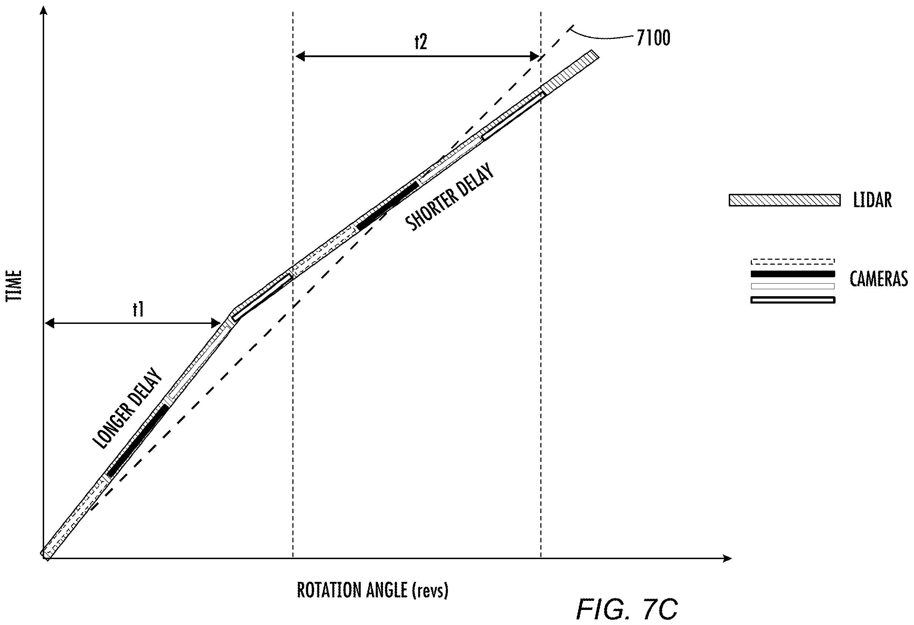

Referring to FIG. 7C, scan lines produced by the cameras 184 (e.g., four cameras) substantially match scan lines produced by the LIDAR device 182 by adjusting one or more parameters of the image capture system 100. For example, in FIG. 7C a rotation rate of the LIDAR device 182 is unsteady, where the rotation rate of the LIDAR device 182 is decreased during the period corresponding to t1 and is increased during the period corresponding to t2. For example, to maintain synchronization of image captures by the cameras 184 with image captures by the LIDAR device 182, the one or more processors 110 can be configured to adjust inter-camera trigger delays as well as adjust a camera rolling shutter speed. For example, when the one or more processors 110 determine the rotation rate of the LIDAR device 182 has decreased, the one or more processors 110 may be configured to delay a trigger to one or more of the cameras 184 and/or to adjust a camera external input clock 4400 to be slowed down (slower roll) to adjust the speed of the rolling shutter sensor 4500 so as to match a sweep speed of the LIDAR device 182. For example, a predetermined interval of time (based on a steady rotation rate of the LIDAR device 182 represented by the dashed line 7100 in FIG. 7C) between an image capture by a first camera and an image capture by a second camera may be adjusted (e.g., increased when the rotation rate of the LIDAR device 182 has decreased). For example, when the one or more processors 110 determine the rotation rate of the LIDAR device 182 has increased, the one or more processors 110 may be configured to speed up a trigger to one or more of the cameras 184 and/or to adjust a camera external input clock 4400 to be sped up (faster roll) to adjust the speed of the rolling shutter sensor 4500 so as to match a sweep speed of the LIDAR device 182. For example, a predetermined interval of time (based on a steady rotation rate of the LIDAR device 182) between an image capture by a first camera and an image capture by a second camera may be adjusted (e.g., decreased when the rotation rate of the LIDAR device 182 has increased). As can be seen by comparing FIG. 7C to FIG. 7B, image captures by the cameras 184 may be more closely aligned or synchronized in time with respect to image captures by the LIDAR device 182 and the speed of the rolling shutter sensor 4500 may be adjusted so as to match a sweep speed of the LIDAR device 182.

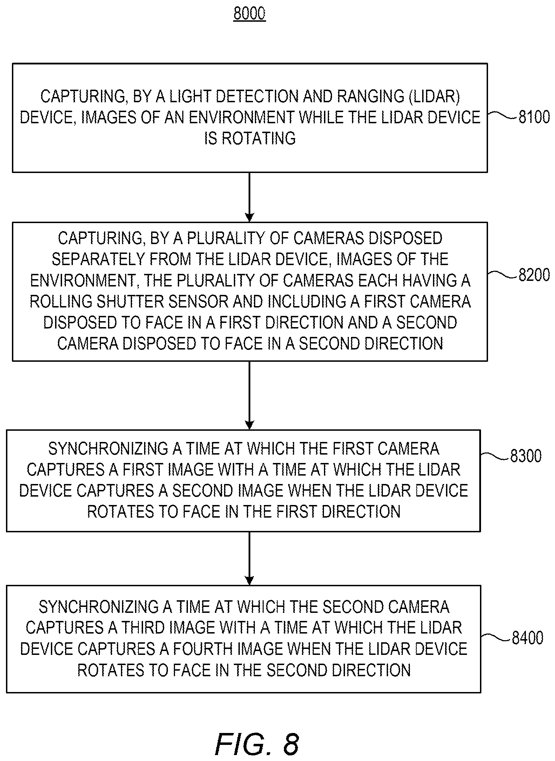

Referring to FIG. 8, a flow diagram of an example, non-limiting computer-implemented method according to one or more examples of the disclosure is illustrated. The flow diagram of FIG. 8 illustrates a method 8000 for generating images via images captured by a LIDAR device 182 and images captured by cameras 184 each having a rolling shutter (i.e., a rolling shutter sensor).

At 8100, the method includes capturing, by a light detection and ranging (LIDAR) device, images of an environment while the LIDAR device is rotating. For example, the LIDAR device 182 may be configured to capture an images of an environment while rotating. For example, the LIDAR device 182 may be mounted on a vehicle, a robot, a home appliance, and the like. As another example, the LIDAR device 182 may be implemented in a security system and capture imagery of an environment (e.g., during the night or day and in various lighting conditions including artificial lighting conditions).

At 8200, the method includes capturing, by a plurality of cameras disposed separately from the LIDAR device, images of the environment, the plurality of cameras each having a rolling shutter sensor and including a first camera disposed to face in a first direction and a second camera disposed to face in a second direction. For example, the cameras 184 may each include a rolling shutter sensor 4500 and may be configured to capture images of the environment (i.e., external surroundings of the image capture system). For example, the cameras 184 may be disposed in close proximity (e.g., less than ten centimeters) to the LIDAR device 182 to reduce or prevent static parallax between images captured by the LIDAR device 182 and the cameras 184. For example, the cameras 184 may be disposed in a ring-shaped pattern and face outwardly in different radial directions so as to capture different scenes of the environment (e.g. ,to capture a 360 degree field of view in the circumferential direction).

At 8300, the method includes synchronizing a time at which the first camera captures a first image with a time at which the LIDAR device captures a second image when the LIDAR device rotates to face in the first direction. At 8400, the method includes synchronizing a time at which the second camera captures a third image with a time at which the LIDAR device captures a fourth image when the LIDAR device rotates to face in the second direction. For example, as discussed with respect to FIG. 4, the LIDAR device 182 and cameras 184 may be synchronized with one another according to various methods such that the LIDAR device 182 captures an image simultaneously to images captured by corresponding cameras. An image having a higher quality can be generated based on the image captured by the LIDAR device 182 and a corresponding camera among the cameras 184 because of the reduced static and dynamic (motion) parallax.

Aspects of the above-described example embodiments may be recorded in non-transitory computer-readable media including program instructions to implement various operations embodied by a computer. The media may also include, alone or in combination with the program instructions, data files, data structures, and the like. Examples of non-transitory computer-readable media include magnetic media such as hard disks, floppy disks, and magnetic tape; optical media such as CD ROM disks, Blue-Ray disks, and DVDs; magneto-optical media such as optical discs; and other hardware devices that are specially configured to store and perform program instructions, such as semiconductor memory, read-only memory (ROM), random access memory (RAM), flash memory, USB memory, and the like. Examples of program instructions include both machine code, such as produced by a compiler, and files containing higher level code that may be executed by the computer using an interpreter. The program instructions may be executed by one or more processors. The described hardware devices may be configured to act as one or more software modules in order to perform the operations of the above-described embodiments, or vice versa. In addition, a non-transitory computer-readable storage medium may be distributed among computer systems connected through a network and computer-readable codes or program instructions may be stored and executed in a decentralized manner. **In** addition, the non-transitory computer-readable storage media may also be embodied in at least one application specific integrated circuit (ASIC) or Field Programmable Gate Array (FPGA).

Each block of the flowchart illustrations may represent a unit, module, segment, or portion of code, which comprises one or more executable instructions for implementing the specified logical function(s). It should also be noted that in some alternative implementations, the functions noted in the blocks may occur out of order. For example, two blocks shown in succession may in fact be executed substantially concurrently (simultaneously) or the blocks may sometimes be executed in the reverse order, depending upon the functionality involved.

## Claims

1. An image capture system (100), comprising:
a light detection and ranging (LIDAR) device (182) configured to rotate and to capture images of an environment while rotating;
a plurality of cameras (184) , disposed separately from the LIDAR device (182), each including a rolling shutter sensor (4500) and each being configured to capture images of the environment, the plurality of cameras (184) including a first camera disposed to face in a first direction and a second camera disposed to face in a second direction; and
one or more processors (110) configured to:
synchronize a time at which the first camera captures a first image with a time at which the LIDAR device (182) captures a second image when the LIDAR device (182) rotates to face in the first direction, and
synchronize a time at which the second camera captures a third image with a time at which the LIDAR device (182) captures a fourth image when the LIDAR device (182) rotates to face in the second direction;
wherein the first camera (184) includes a plurality of lenses configured so that a scan pattern output from the lenses matches a scan pattern of the LIDAR device (182).

2. The image capture system (100) of claim 1, wherein the first camera includes a plurality of cylindrical lens groups.

3. The image capture system (100) of claim 2, wherein
the plurality of cylindrical lens groups includes a first cylindrical lens group and a second cylindrical lens group, and
the second cylindrical lens group is disposed in a perpendicular manner with respect to the first cylindrical lens group.

4. The image capture system (100) of claim 3, wherein the first camera produces a same sampling pattern as the LIDAR device (182).

5. The image capture system (100) of any preceding claim, wherein the one or more processors (110) are configured to synchronize the time at which the first camera captures the first image with the time at which the LIDAR device (182) captures the second image when the LIDAR device (182) rotates to face in the first direction by:
outputting, by the LIDAR device (182), a signal indicating a position of the LIDAR device (182), and
triggering the first camera to capture the first image based on the signal indicating the position of the LIDAR device (182).

6. The image capture system (100) of any preceding claim, wherein the one or more processors (110) are configured to synchronize the time at which the first camera captures the first image with the time at which the LIDAR device (182) captures the second image when the LIDAR device (182) rotates to face in the first direction by one of:
adjusting a speed of an external clock provided to the first camera to adjust a scanning velocity of the rolling shutter sensor (4500); or
adjusting a rotation rate of the LIDAR device (182) by adjusting a speed of an external clock provided to the LIDAR device (182).

7. The image capture system (100) of any preceding claim, wherein the plurality of cameras (184) are arranged in a ring-shaped pattern about an axis of rotation of the LIDAR device (182); and/or
wherein the LIDAR device (182) and the plurality of cameras (184) are spaced apart from each other in a direction along an axis of rotation of the LIDAR device (182) by less than a threshold distance, the threshold distance optionally being ten centimeters or less.

8. The image capture system (100) of any preceding claim, wherein the plurality of cameras (184) include at least one red-green-blue (RGB) camera.

9. The image capture system (100) of any preceding claim, wherein the image capture system (100) is mounted on a vehicle.

10. A computer-implemented method (8000), comprising:
capturing (8100), by a light detection and ranging (LIDAR) device (182), images of an environment while the LIDAR device (182) is rotating;
capturing 98200), by a plurality of cameras (184) disposed separately from the LIDAR device (182), images of the environment, the plurality of cameras (184) each having a rolling shutter sensor (4500) and including a first camera disposed to face in a first direction and a second camera disposed to face in a second direction;
synchronizing (8300) a time at which the first camera captures a first image with a time at which the LIDAR device (182) captures a second image when the LIDAR device (182) rotates to face in the first direction; and
synchronizing (8400) a time at which the second camera captures a third image with a time at which the LIDAR device (182) captures a fourth image when the LIDAR device (182) rotates to face in the second direction;
wherein the first camera (184) includes a plurality of lenses configured so that a scan pattern output from the lenses matches a scan pattern of the LIDAR device (182).

11. The method (8000) of claim 10, wherein
the first camera includes a first cylindrical lens group and a second cylindrical lens group, and
the second cylindrical lens group is disposed in a perpendicular manner with respect to the first cylindrical lens group.

12. The method (8000) of claim 10 or 11, wherein synchronizing (8300) the time at which the first camera captures the first image with the time at which the LIDAR device (182) captures the second image when the LIDAR device (182) rotates to face in the first direction comprises:
outputting, by the LIDAR device (182), a signal indicating a position of the LIDAR device (182), and
triggering the first camera to capture the first image based on the signal indicating the position of the LIDAR device (182).

13. The method (8000) of any one of claims 10 to 12, wherein synchronizing (8300) the time at which the first camera captures the first image with the time at which the LIDAR device (182) captures the second image when the LIDAR device (182) rotates to face in the first direction comprises one of:
adjusting a speed of an external clock provided to the first camera to adjust a scanning velocity of the rolling shutter sensor (4500); or
adjusting a rotation rate of the LIDAR device (182) by adjusting a speed of an external clock provided to the LIDAR device (182).

14. The method (8000) of any one of claims 10 to 13, wherein
the LIDAR device (182) and the plurality of cameras (184) are spaced apart from each other in a direction along an axis of rotation of the LIDAR device (182) by less than a threshold distance, and
the plurality of cameras (184) are arranged in a ring-shaped pattern about the axis of rotation of the LIDAR device (182).

15. A non-transitory computer-readable medium which stores instructions that are executable by one or more processors (110) of an image capture system (100), the instructions comprising the method of any one of claims 10 to 14.

## Patentansprüche

1. Bilderfassungssystem (100), umfassend:
eine Lichtdetektions- und Entfernungsmessvorrichtung (light detection and ranging, LIDAR) (182), die dazu konfiguriert ist, sich zu drehen und während des Drehens Bilder von einer Umgebung zu erfassen;
eine Vielzahl von Kameras (184), die getrennt von der LIDAR-Vorrichtung (182) angeordnet sind, wobei jede einen Rollladensensor (4500) beinhaltet und dazu konfiguriert ist, Bilder der Umgebung zu erfassen, wobei die Vielzahl von Kameras (184) eine erste Kamera beinhaltet, die angeordnet ist, um in eine erste Richtung zu zeigen, und eine zweite Kamera, die angeordnet ist, um in eine zweite Richtung zu zeigen; und
einen oder mehrere Prozessoren (110), die zu Folgendem konfiguriert sind:
Synchronisieren eines Zeitpunkts, zu dem die erste Kamera ein erstes Bild erfasst, mit einem Zeitpunkt, zu dem die LIDAR-Vorrichtung (182) ein zweites Bild erfasst, wenn sich die LIDAR-Vorrichtung (182) dreht, um in die erste Richtung zu zeigen, und Synchronisieren eines Zeitpunkts, zu dem die zweite Kamera ein drittes Bild erfasst, mit einem Zeitpunkt, zu dem die LIDAR-Vorrichtung (182) ein viertes Bild erfasst, wenn sich die LIDAR-Vorrichtung (182) dreht, um in die zweite Richtung zu zeigen;
wobei die erste Kamera (184) eine Vielzahl von Linsen beinhaltet, die so konfiguriert ist, dass ein von den Linsen ausgegebenes Abtastmuster mit einem Abtastmuster der LIDAR-Vorrichtung (182) übereinstimmt.

2. Bilderfassungssystem (100) nach Anspruch 1, wobei die erste Kamera eine Vielzahl von zylindrischen Linsengruppen beinhaltet.

3. Bilderfassungssystem (100) nach Anspruch 2, wobei
die Vielzahl von zylindrischen Linsengruppen eine erste zylindrische Linsengruppe und eine zweite zylindrische Linsengruppe beinhaltet, und
die zweite zylindrische Linsengruppe senkrecht zu der ersten zylindrischen Linsengruppe angeordnet ist.

4. Bilderfassungssystem (100) nach Anspruch 3, wobei die erste Kamera ein gleiches Abtastmuster wie die LIDAR-Vorrichtung (182) herstellt.

5. Bilderfassungssystem (100) nach einem der vorhergehenden Ansprüche, wobei der eine oder die mehreren Prozessoren (110) dazu konfiguriert sind, die Zeit, zu der die erste Kamera das erste Bild erfasst, mit der Zeit zu synchronisieren, zu der die LIDAR-Vorrichtung (182) das zweite Bild erfasst, wenn sich die LIDAR-Vorrichtung (182) dreht, um in die erste Richtung zu zeigen, durch:
Ausgeben eines Signals durch die LIDAR-Vorrichtung (182), das eine Position der LIDAR-Vorrichtung (182) angibt, und
Auslösen der ersten Kamera zum Erfassen des ersten Bildes basierend auf dem Signal, das die Position der LIDAR-Vorrichtung (182) angibt.

6. Bilderfassungssystem (100) nach einem der vorhergehenden Ansprüche, wobei der eine oder die mehreren Prozessoren (110) dazu konfiguriert sind, die Zeit, zu der die erste Kamera das erste Bild erfasst, mit der Zeit zu synchronisieren, zu der die LIDAR-Vorrichtung (182) das zweite Bild erfasst, wenn sich die LIDAR-Vorrichtung (182) dreht, um in die erste Richtung zu zeigen, durch eines der Folgenden:
Anpassen der Geschwindigkeit einer externen Uhr, die der ersten Kamera zur Verfügung gestellt wird, um die Abtastgeschwindigkeit des Rollladensensors (4500) anzupassen; oder
Anpassen einer Rotationsrate der LIDAR-Vorrichtung (182) durch das Anpassen der Geschwindigkeit eines externen Taktgebers, der der LIDAR-Vorrichtung (182) zur Verfügung gestellt wird.

7. Bilderfassungssystem (100) nach einem der vorhergehenden Ansprüche, wobei die Vielzahl von Kameras (184) in einem ringförmigen Muster um eine Drehachse der LIDAR-Vorrichtung (182) angeordnet ist; und/oder
wobei die LIDAR-Vorrichtung (182) und die Vielzahl von Kameras (184) in einer Richtung entlang einer Drehachse der LIDAR-Vorrichtung (182) um weniger als einen Schwellenabstand voneinander beabstandet sind, wobei der Schwellenabstand optional zehn Zentimeter oder weniger beträgt.

8. Bilderfassungssystem (100) nach einem der vorhergehenden Ansprüche, wobei die Vielzahl von Kameras (184) mindestens eine Rot-Grün-Blau-Kamera (red-green-blue, RGB) umfasst.

9. Bilderfassungssystem (100) nach einem der vorhergehenden Ansprüche, wobei das Bilderfassungssystem (100) auf einem Fahrzeug montiert ist.

10. Computerimplementiertes Verfahren (8000), umfassend:
Erfassen (8100) von Bildern einer Umgebung durch eine LIDAR-Vorrichtung (182), während die LIDAR-Vorrichtung (182) rotiert;
Erfassen (98200) von Bildern der Umgebung durch eine Vielzahl von Kameras (184), die getrennt von der LIDAR-Vorrichtung (182) angeordnet ist, wobei die Vielzahl von Kameras (184) jeweils einen Rollladensensor (4500) aufweist und eine erste Kamera beinhaltet, die angeordnet ist, um in eine erste Richtung zu zeigen, und eine zweite Kamera beinhaltet, die angeordnet ist, um in eine zweite Richtung zu zeigen;
Synchronisieren (8300) eines Zeitpunkts, zu dem die erste Kamera ein erstes Bild erfasst, mit einem Zeitpunkt, zu dem die LIDAR-Vorrichtung (182) ein zweites Bild erfasst, wenn sich die LIDAR-Vorrichtung (182) dreht, um in die erste Richtung zu zeigen, und Synchronisieren (8400) eines Zeitpunkts, zu dem die zweite Kamera ein drittes Bild erfasst, mit einem Zeitpunkt, zu dem die LIDAR-Vorrichtung (182) ein viertes Bild erfasst, wenn sich die LIDAR-Vorrichtung (182) dreht, um in die zweite Richtung zu zeigen;
wobei die erste Kamera (184) eine Vielzahl von Linsen beinhaltet, die so konfiguriert ist, dass ein von den Linsen ausgegebenes Abtastmuster mit einem Abtastmuster der LIDAR-Vorrichtung (182) übereinstimmt.

11. Verfahren (8000) nach Anspruch 10, wobei
die erste Kamera eine erste zylindrische Linsengruppe und eine zweite zylindrische Linsengruppe beinhaltet und
die zweite zylindrische Linsengruppe senkrecht zu der ersten zylindrischen Linsengruppe angeordnet ist.

12. Verfahren (8000) nach Anspruch 10 oder 11, wobei das Synchronisieren (8300) der Zeit, zu der die erste Kamera das erste Bild erfasst, mit der Zeit, zu der die LIDAR-Vorrichtung (182) das zweite Bild erfasst, wenn sich die LIDAR-Vorrichtung (182) dreht, um in die erste Richtung zu zeigen, Folgendes umfasst:
Ausgeben eines Signals durch die LIDAR-Vorrichtung (182), das eine Position der LIDAR-Vorrichtung (182) angibt, und
Auslösen der ersten Kamera zum Erfassen des ersten Bildes basierend auf dem Signal, das die Position der LIDAR-Vorrichtung (182) angibt.

13. Verfahren (8000) nach einem der Ansprüche 10 bis 12, wobei das Synchronisieren (8300) der Zeit, zu der die erste Kamera das erste Bild erfasst, mit der Zeit, zu der die LIDAR-Vorrichtung (182) das zweite Bild erfasst, wenn sich die LIDAR-Vorrichtung (182) dreht, um in die erste Richtung zu zeigen, Folgendes umfasst:
Anpassen der Geschwindigkeit einer externen Uhr, die der ersten Kamera zur Verfügung gestellt wird, um die Abtastgeschwindigkeit des Rollladensensors (4500) anzupassen; oder
Anpassen einer Rotationsrate der LIDAR-Vorrichtung (182) durch das Anpassen der Geschwindigkeit eines externen Taktgebers, der der LIDAR-Vorrichtung (182) zur Verfügung gestellt wird.

14. Verfahren (8000) nach einem der Ansprüche 10 bis 13, wobei die LIDAR-Vorrichtung (182) und die Vielzahl von Kameras (184) in einer Richtung entlang einer Drehachse der LIDAR-Vorrichtung (182) um weniger als einen Schwellenabstand voneinander beabstandet sind, und
die Vielzahl von Kameras (184) in einem ringförmigen Muster um die Drehachse der LIDAR-Vorrichtung (182) angeordnet ist.

15. Nichttransitorisches computerlesbares Medium, das Anweisungen speichert, die durch einen oder mehrere Prozessoren (110) eines Bilderfassungssystems (100) ausführbar sind, wobei die Anweisungen das Verfahren nach einem der Ansprüche 10 bis 14 umfassen.

## Revendications

1. Système de capture d'image (100) comprenant :
un dispositif de détection et de télémétrie par lumière (LIDAR) (182) configuré pour tourner et pour capturer des images d'un environnement pendant qu'il tourne ;
une pluralité de caméras (184), disposées séparément du dispositif LIDAR (182), chacune comportant un capteur à obturateur roulant (4500) et chacune étant configurée pour capturer des images de l'environnement, la pluralité de caméras (184) comportant une première caméra disposée de façon à faire face à une première direction et une seconde caméra disposée de façon à faire face à une seconde direction ; et
un ou plusieurs processeurs (110) configurés pour :
synchroniser l'instant auquel la première caméra capture une première image avec l'instant auquel le dispositif LIDAR (182) capture une deuxième image lorsque le dispositif LIDAR (182) tourne pour faire face à la première direction, et
synchroniser l'instant auquel la seconde caméra capture une troisième image avec l'instant auquel le dispositif LIDAR (182) capture une quatrième image lorsque le dispositif LIDAR (182) tourne pour faire face à la seconde direction;
dans lequel la première caméra (184) comporte une pluralité de lentilles configurées de telle sorte qu'un motif de balayage émis par les lentilles corresponde à un motif de balayage du dispositif LIDAR (182).

2. Système de capture d'image (100) selon la revendication 1, dans lequel la première caméra comporte une pluralité de groupes de lentilles cylindriques.

3. Système de capture d'image (100) selon la revendication 2, dans lequel
la pluralité de groupes de lentilles cylindriques comporte un premier groupe de lentilles cylindriques et un second groupe de lentilles cylindriques, et
le second groupe de lentilles cylindriques est disposé de manière perpendiculaire par rapport au premier groupe de lentilles cylindriques.

4. Système de capture d'image (100) selon la revendication 3, dans lequel la première caméra produit un même motif d'échantillonnage que le dispositif LIDAR (182).

5. Système de capture d'images (100) selon une quelconque revendication précédente, dans lequel les un ou plusieurs processeurs (110) sont configurés pour synchroniser l'instant auquel la première caméra capture la première image avec l'instant auquel le dispositif LIDAR (182) capture la deuxième image lorsque le dispositif LIDAR (182) tourne pour faire face à la première direction en :
émettant, par le dispositif LIDAR (182), un signal indiquant une position du dispositif LIDAR (182), et
déclenchant la première caméra pour capturer la première image sur la base du signal indiquant la position du dispositif LIDAR (182).

6. Système de capture d'images (100) selon une quelconque revendication précédente, dans lequel les un ou plusieurs processeurs (110) sont configurés pour synchroniser l'instant auquel la première caméra capture la première image avec l'instant auquel le dispositif LIDAR (182) capture la deuxième image lorsque le dispositif LIDAR (182) tourne pour faire face à la première direction en :
ajustant la vitesse d'une horloge externe fournie à la première caméra pour ajuster une vitesse de balayage du capteur à obturateur roulant (4500) ; ou
ajustant une vitesse de rotation du dispositif LIDAR (182) en ajustant une vitesse d'une horloge externe fournie au dispositif LIDAR (182).

7. Système de capture d'images (100) selon une quelconque revendication précédente, dans lequel la pluralité de caméras (184) sont disposées en anneau autour d'un axe de rotation du dispositif LIDAR (182) ; et/ou
dans lequel le dispositif LIDAR (182) et la pluralité de caméras (184) sont espacés les uns des autres dans une direction le long d'un axe de rotation du dispositif LIDAR (182) de moins d'une distance seuil, la distance seuil étant éventuellement de dix centimètres ou moins.

8. Système de capture d'image (100) selon une quelconque revendication précédente, dans lequel la pluralité de caméras (184) comportent au moins une caméra rouge-vert-bleu (RVB).

9. Système de capture d'image (100) selon une quelconque revendication précédente, dans lequel le système de capture d'image (100) est monté sur un véhicule.

10. Procédé mis en œuvre par ordinateur (8000), comprenant :
la capture (8100), par un dispositif de détection et de télémétrie par la lumière (LIDAR) (182), d'images d'un environnement pendant que le dispositif LIDAR (182) tourne ;
la capture (8200), par une pluralité de caméras (184), disposées séparément du dispositif LIDAR (182), d'images de l'environnement, la pluralité de caméras (184) comportant chacune un capteur à obturateur roulant (4500) et comportant une première caméra disposée de façon à faire face à une première direction et une seconde caméra disposée de façon à faire face à une seconde direction ;
la synchronisation (8300) de l'instant auquel la première caméra capture une première image avec l'instant auquel le dispositif LIDAR (182) capture une deuxième image lorsque le dispositif LIDAR (182) tourne pour faire face à la première direction ; et
la synchronisation (8400) de l'instant auquel la seconde caméra capture une troisième image avec l'instant auquel le dispositif LIDAR (182) capture une quatrième image lorsque le dispositif LIDAR (182) tourne pour faire face à la seconde direction ;
dans lequel la première caméra (184) comporte une pluralité de lentilles configurées de telle sorte qu'un motif de balayage émis par les lentilles corresponde à un motif de balayage du dispositif LIDAR (182).

11. Procédé (8000) selon la revendication 10, dans lequel
la première caméra comporte un premier groupe de lentilles cylindriques et un second groupe de lentilles cylindriques, et
le second groupe de lentilles cylindriques est disposé de manière perpendiculaire par rapport au premier groupe de lentilles cylindriques.

12. Procédé (8000) selon la revendication 10 ou 11, dans lequel la synchronisation (8300) de l'instant auquel la première caméra capture la première image avec l'instant auquel le dispositif LIDAR (182) capture la deuxième image lorsque le dispositif LIDAR (182) tourne pour faire face à la première direction comprend :
l'émission, par le dispositif LIDAR (182), d'un signal indiquant une position du dispositif LIDAR (182), et
le déclenchement de la première caméra pour capturer la première image sur la base du signal indiquant la position du dispositif LIDAR (182).

13. Procédé (8000) selon l'une quelconque des revendications 10 à 12, dans lequel la synchronisation (8300) de l'instant auquel la première caméra capture la première image avec l'instant auquel le dispositif LIDAR (182) capture la deuxième image lorsque le dispositif LIDAR (182) tourne pour faire face à la première direction comprend l'un :
d'un ajustement d'une vitesse d'une horloge externe fournie à la première caméra pour ajuster la vitesse de balayage du capteur à obturateur roulant (4500) ; ou
d'un ajustement d'une vitesse de rotation du dispositif LIDAR (182) en ajustant une vitesse d'une horloge externe fournie au dispositif LIDAR (182).

14. Procédé (8000) selon l'une quelconque des revendications 10 à 13, dans lequel
le dispositif LIDAR (182) et la pluralité de caméras (184) sont espacés les uns des autres dans une direction le long d'un axe de rotation du dispositif LIDAR (182) de moins d'une distance seuil, et
la pluralité de caméras (184) sont disposées en anneau autour de l'axe de rotation du dispositif LIDAR (182).

15. Support lisible par ordinateur non transitoire qui stocke des instructions qui sont exécutables par un ou plusieurs processeurs (110) d'un système de capture d'image (100), les instructions comprenant le procédé selon l'une quelconque des revendications 10 à 14.
